Europäisches Patentamt

European Patent Office

Office européen des brevets

(11) Veröffentlichungsnummer: **0 457 964 A1**

## (12) EUROPÄISCHE PATENTANMELDUNG

(21) Anmeldenummer: 90123709.9

(22) Anmeldetag: **10.12.90**

(51) Int. Cl.5: **H04B 1/16**

(30) Priorität: **11.05.90 DE 4015094**

(43) Veröffentlichungstag der Anmeldung:
**27.11.91 Patentblatt 91/48**

(84) Benannte Vertragsstaaten:
**DE FR GB SE**

(71) Anmelder: **Webasto AG Fahrzeugtechnik**
**Kraillingerstrasse 5**
**W-8035 Stockdorf(DE)**

(72) Erfinder: **Neumann, Erich**
**Diezweg 16**
**W-8000 München 71(DE)**

(54) **Fernwirkanlage, insbesondere zur Ansteuerung von Fahrzeugzusatzeinrichtungen.**

(57) Es wird eine Fernwirkanlage angegeben, die insbesondere zur Ansteuerung für Fahrzeugzusatzeinrichtungen, wie ein Fahrzeugzusatzheizgeräte, eine Klimaanlage, ein Schiebedach, eine Alarmanlage, o.dgl. bestimmt ist.

Eine solche Fernwirkanlage umfaßt einen Sender und einen Empfänger, wobei der Empfänger mit einem vorbestimmten Taktverhältnis von Einschaltzustand zu Ausschaltzustand betreibbar ist und der Sender selbsttätig während einer vorbestimmten Zeitdauer aktiviert bleibt. Das Taktverhältnis beträgt vorzugsweise 1:4, die vorbestimmte Einschaltzeitdauer des Senders beträgt mindestens etwa 5 Sekunden und die vorbestimmte Zeitdauer des Einschaltzustandes des Empfängers beläuft sich auf etwa 1 Sekunde. Mit einer solchen Fernwirkanlage läßt sich die Ruhestromaufnahme insbesonders des Empfängers beträchtlich reduzieren, so daß eine unerwünschte Entladung einer den Empfänger versorgenden Batterie, wie einer fahrzeugeigenen Batterie im Anwendungsbeispiel eines Kraftfahrzeugs, vermieden wird. Die reduzierte Ruhestromaufnahme der erfindungsgemäßen Fernwirkanlage gestattet, daß die Fernwirkanlage auch über eine längere Zeitdauer hinweg in Betriebsbereitschaft gehalten werden kann.

FIG. 1

Die Erfindung befaßt sich mit einer Fernwirkanlage, insbesondere zur Ansteuerung von Fahrzeugzusatzeinrichtungen, wie einem Fahrzeugzusatzheizgerät, einer Klimaanlage, einem Schiebedach, einer Alarmanlage, einer Autotelefonanlage o.dgl., welche einen Sender und einen Empfänger aufweist.

Fernwirkanlagen der vorstehend genannten Art, wie eine Sende- und Empfangsanordnung für den Sprechfunkverkehr sind beispielsweise aus der DE-OS 33 14 557 bekannt. Auch gibt es eine Fernwirkanlage mit einem Sender und einem Empfänger für die Ferneinschaltung eines Fahrzeugzusatzheizgeräts, das in ein Kraftfahrzeug eingebaut ist. Der Empfänger ist hierbei im Kraftfahrzeug montiert und über entsprechende Leitungen mit einer Steuereinrichtung eines Fahrzeugzusatzheizgeräts wirkverbunden. Der Sender kann vom Fahrzeugbenutzer mitgeführt werden, um durch dessen Aktivierung das mit dem Empfänger wirkverbundene Fahrzeugzusatzheizgerät in Betrieb zu nehmen.

Bei allen diesen in Kraftfahrzeugen eingebauten Zusatzeinrichtungen ist die Auslegung derart getroffen, daß der Empfänger, der auch im Zeitmultiplexverfahren geschaltet werden kann und im Fahrzeug eingebaut ist, von der fahrzeugeigenen Batterie zur Stromversorgung gespeist wird. Hierbei hat sich gezeigt, daß ein solcher im Fahrzeug eingebauter Empfänger zur Einnahme seines Bereitschaftszustandes eine Ruhestromaufnahme von bis zu 20 mA haben kann. Durch diese relativ hohe Ruhestromaufnahme kommt es zu einer unerwünschten Entladung der fahrzeugeigenen Batterie, die zu späteren Startschwierigkeiten beispielsweise bei der Brennkraftmaschine führen kann. Daher empfehlen die meisten Hersteller derartiger Fahrzeugzusatzeinrichtungen eine Fernwirkanlage nur gezielt im Bereitschaftszustand zu halten, wenn das Fahrzeug abgestellt wird.

Die Erfindung zielt darauf ab, unter Überwindung der zuvor geschilderten Schwierigkeiten eine Fernwirkanlage, insbesondere zur Ansteuerung von Fahrzeugzusatzeinrichtungen der eingangs genannten Art bereitzustellen, welche einen Betrieb bei einer wesentlichen Herabsetzung der Ruhestromaufnahme gestattet, so daß man die Fernwirkanlage auch in Bereitschaftszustand im abgestellten Fahrzeug lassen kann, ohne daß die Gefahr einer nennenswerten Batterieentladung hierbei zu befürchten ist.

Nach der Erfindung zeichnet sich hierzu eine Fernwirkanlage, insbesondere zur Ansteuerung für Fahrzeugzusatzeinrichtungen wie einem Fahrzeugzusatzheizgerät, einer Klimaanlage, einem Schiebedach, einer Alarmanlage, u.dgl., welche einen Sender und einen Empfänger umfaßt, dadurch aus, daß der Empfänger mit einem Taktverhältnis von Einschaltzustand zu Ausschaltzustand betreibbar ist und der Sender selbsttätig während einer vorbestimmten Zeitdauer aktiviert bleibt.

Bei der erfindungsgemäßen Fernwirkanlage ist somit der Empfänger nicht ständig durch die Stromversorgung des Fahrzeugs gespeist, sondern er wird in einem vorbestimmten Taktverhältnis ein- und ausgeschaltet, um die Ruhestromaufnahme des Empfängers zu reduzieren. Zugleich bleibt der Sender nach seiner Aktivierung selbsttätig während einer vorbestimmten Zeitdauer im eingeschalteten Zustand, wobei das Taktverhältnis des Empfängers und die vorbestimmte Zeitdauer des Aktivseins des Senders so aufeinander abgestimmt sind, daß der Empfänger während dieser Zeitdauer in der Lage ist, ein vom Sender ausgegebenes Signal aufzunehmen und zu verarbeiten. Versuche haben gezeigt, daß sich durch die erfindungsgemäße Auslegung der Fernwirkanlage eine Herabsetzung der Ruhestromaufnahme von etwa 75% erreichen läßt. Wenn bisher bei einer Fernwirkanlage für ein Fahrzeugzusatzheizgerät als eine Fahrzeugzusatzeinrichtung sich eine Ruhestromaufnahme von 20 mA ergab, erhält man dank der erfindungsgemäßen Auslegung der Fernwirkanlage im Mittel eine Ruhestromaufnahme von etwa 5 mA. Dank dieser beträchtlichen Herabsetzung der Ruhestromaufnahme kann eine nennenswerte und spürbare Entladung der fahrzeugeigenen Batterie vermieden werden und zudem erhält man den Vorteil, daß die jeweils gewünschte und mit der Fernwirkanlage anzusteuernde Fahrzeugzusatzeinrichtung auch dann in Bereitschaftsstellung gehalten werden kann, wenn das Fahrzeug beispielsweise längere Zeit abgestellt oder geparkt wird. Zum Aktivieren der Fernwirkanlage braucht dann lediglich der Sender betätigt zu werden und die mit dem Empfänger verbundene Fahrzeugzusatzeinrichtung kann in Betrieb genommen werden.

Das vorstehend beschriebene Wirkprinzip der erfindungsgemäßen Fernwirkanlage läßt sich auch zum Betreiben von Personanrufanlagen verwirklichen.

Vorzugsweise ist die Fernwirkanlage nach der Erfindung derart ausgelegt, daß der Empfänger während der selbständigen Einschaltdauer des Senders mindestens einmal einschaltet.

Hierdurch wird sichergestellt, daß der Empfänger während der selbständigen Einschaltdauer ausreichend Zeit hat, das vom Sender abgegebene Signal aufzufangen und in entsprechender Weise zu verarbeiten.

Gemäß einer bevorzugten Auslegungsform beträgt das Taktverhältnis des Empfängers 1:4. Eine vorbestimmte Einschaltzeitdauer des Senders, während dieser der Sender aktiviert bleibt, beläuft sich vorzugsweise auf 5 Sekunden. Die vorbestimmte Zeitdauer des Einschaltzustandes des Empfängers beläuft sich hierbei vorzugsweise auf etwa 1 Sekunde.

Natürlich ist die Erfindung nicht auf diese bevorzugten Angaben hinsichtlich des Taktverhältnisses, der Einschaltzeitdauer u.dgl. beschränkt, sondern die Abstimmung dieser Grössen erfolgt derart, daß man die jeweils mit der Fernwirkanlage zu betreibende Fahrzeugzusatzeinrichtung zuverlässig in Betrieb nehmen oder ausschalten kann. In diese Abstimmung gehen auch gerätespezifische Größen der jeweiligen Fahrzeugzusatzeinrichtung mit ein.

Die Erfindung wird nachstehend anhand einer bevorzugten Ausführungsform unter Bezugnahme auf die beigefügte Zeichnung näher erläutert. Darin zeigt:

Fig. 1    ein schematisches Blockdiagramm zur Verdeutlichung des prinzipiellen Aufbaus einer Fernwirkanlage, und

Fig. 2    ein Impulsdiagramm zur Verdeutlichung der Arbeitsweise der erfindungsgemäßen Fernwirkanlage.

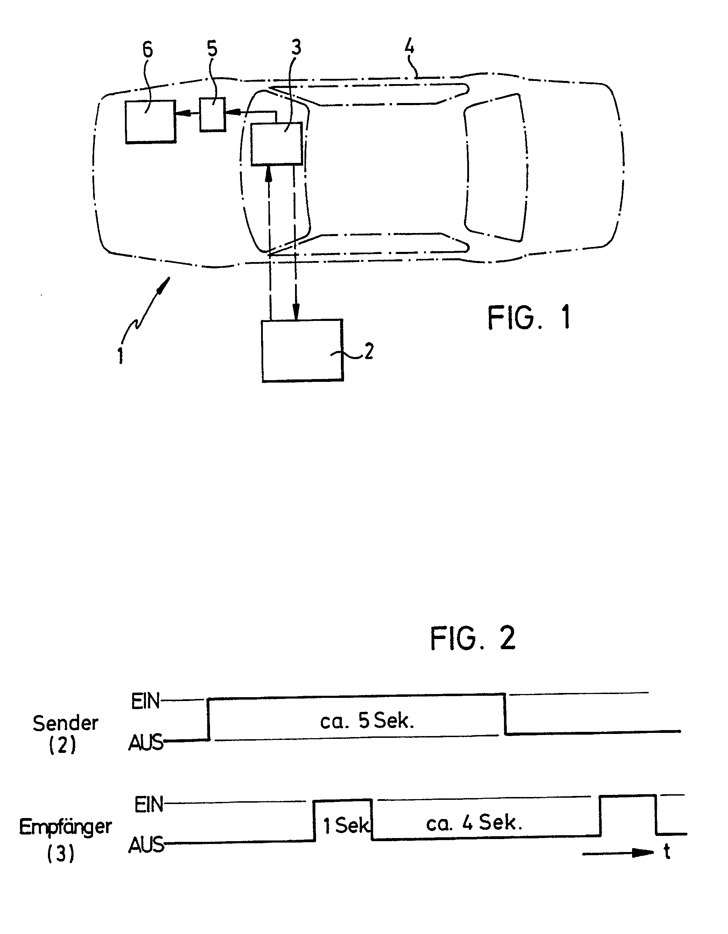

In Fig. 1 ist eine Fernwirkanlage insgesamt mit 1 bezeichnet. Diese Fernwirkanlage 1 umfaßt einen Sender 2 und einen Empfänger 3. Wie in Fig. 1 verdeutlicht ist, ist bei dem dargestellten Beispiel der Empfänger 3 in einem Fahrzeug 4 angebracht und dort über nicht näher dargestellte Leitungen zur Energieversorgung mit der fahrzeugeigenen Batterie (ebenfalls nicht dargestellt) verbunden. Ausgangsseitig ist der Empfänger 3 über eine Steuereinrichtung 5 mit einer im Fahrzeug 4 eingebauten Zusatzeinrichtung 6 wirkverbunden. Bei dieser Zusatzeinrichtung 6 kann es sich um ein Fahrzeugzusatzheizgerät, eine Klimaanlage, ein Schiebedach, eine Alarmanlage o.dgl. handeln.

In Fig. 2 ist ein Impulsdiagramm gezeigt, wobei im oberen Teil der Stromverlauf für den Sender 2 und im unteren Teil der Stromverlauf für den Empfänger 3 an einem Beispiel aufgetragen über einer Zeitachse dargestellt ist. Bei dem dargestellten Beispiel ist das Taktverhältnis von Einschaltzustand zu Ausschaltzustand des Empfängers 3 mit 1:4 gewählt, was bedeutet, daß etwa alle 4 Sekunden der Empfänger 3 aktiviert wird. Der Empfänger 3 bleibt dann eine vorbestimmte Zeitdauer von etwa 1 Sekunde cder mindestens 1 Sekunde in seinem Einschaltzustand und ist somit betriebsbereit. Der Sender 2 hingegen bleibt selbsttätig etwa über eine vorbestimmte Einschaltzeitdauer von etwa 5 Sekunden oder mindestens 5 Sekunden in seinem Einschaltzustand, d.h. er nimmt einen aktivierten Zustand ein, so daß für den Fall, daß während dieser Einschaltzeitdauer von etwa 5 Sekunden ein Signal vom Sender 2 abgegeben wird, dieses vom Empfänger 3 während dessen Einschaltzeitdauer von etwa 1 Sekunde empfangen werden kann. Dieser Zeitraum von 1 Sekunde des Einschaltzustandes des Empfängers 3 reicht aus, um eine Signalverarbeitung im Empfänger 3 vorzunehmen und gegebenenfalls den Empfänger aktiviert zu halten, wenn beispielsweise ein Einschaltbefehl für die Zusatzeinrichtung 6 vom Sender 2 als Sendesignal abgegeben wurde. Wird hingegen vom Sender 2 während dieses Zeitraumes unter Einnahme seines Einschaltzustandes von etwa 5 Sekunden kein Signal abgegeben, so wird der Empfänger 3 selbsttätig wieder deaktiviert.

Dieses Ausführungsbeispiel zeigt, daß der von der fahrzeugeigenen Batterie versorgte Empfänger 3 im Kraftfahrzeug beispielsweise in seinem Bereitschaftszustand nur sehr kurz, beispielsweise nur 1 Sekunde lang, in Betrieb ist, während bis zum nächsten Einschaltimpuls ein Zeitraum von etwa 4 Sekunden verstreicht. Während diesem Zwischenzeitraums nimmt der Empfänger 3 im wesentlichen keinen Ruhestrom auf.

Durch die erfindungsgemäße Fernwirkanlage 1 läßt sich daher die Ruhestromaufnahme des Empfängers 3, der in das Fahrzeug 4 eingebaut ist und von der fahrzeugeigenen Batterie versorgt wird, auf etwa 75% jener Ruhestromaufnahme reduzieren, die der Empfänger 3 hätte, wenn er ständig in Betriebsbereitschaft wäre, wie dies bisher bei derartigen Fernwirkanlagen der Fall war. Bei dem in Fig. 2 dargestellten Beispiel erhält man für die Ruhestromaufnahme des Empfängers 3 im Mittel eine Größe von etwa 5 mA, während diese Ruhestromaufnahme bei bisher üblichen Fernwirkanlagen sich auf mindestens 20 mA belief. Durch diese mit der erfindungsgemäßen Fernwirkanlage 1 erzielte beträchtliche Reduzierung der Ruhestromaufnahme kann somit eine unerwünschte Entladung der Batterie des Fahrzeugs 4 vermieden werden, so daß keine Startschwierigkeiten bei der Brennkraftmaschine des Kraftfahrzeugs zu befürchten sind. Auch kann eine die Batterie des Fahrzeugs 4 schonende häufige Entladung, bedingt durch die Ruhestromaufnahme, von irgendwelchen von der fahrzeugeigenen Batterie gespeisten Verbrauchern vermieden werden.

Natürlich können in Abhängigkeit von den jeweiligen Gegebenheiten und den gerätespezifischen Einzelheiten der Zusatzeinrichtung 6 auch andere Taktverhältnisse als das als Beispiel angegebene Taktverhältnis von 1:4 gewählt werden. Gleiches gilt auch für die Einschaltzeitdauer des Empfängers 3, die zweckmäßigerweise auf das jeweils gegebene Taktverhältnis des Senders 2 abgestimmt wird.

Das erfindungsgemäße Lösungsprinzip der Fernwirkanlage zur Reduzierung der Ruhestromaufnahme derselben kann auch beispielsweise bei einer Personenrufanlage verwirklicht werden, um eine schnelle Batterieentladung einer solchen Personenrufanlage zu vermeiden.

Bezugszeichen

| 1 | Fernwirkanlage insgesamt |
|---|---|
| 2 | Sender |
| 3 | Empfänger |
| 4 | Fahrzeug |
| 5 | Steuereinrichtung |
| 6 | Zusatzeinrichtung |

**Patentansprüche**

1. Fernwirkanlage, insbesondere zur AnSteuerung von Fahrzeugzusatzeinrichtungen, wie eines Fahrzeugzusatzheizgeräts, einer Klimaanlage, eines Schiebedachs, einer Alarmanlage, o.dgl., mit einem Sender und einem Empfänger, dadurch **gekennzeichnet,** daß der Empfänger (3) mit einem vorbestimmten Taktverhältnis von Einschaltzustand zu Ausschaltzustand betreibbar ist, und der Sender (2) selbsttätig während einer vorbestimmten Zeitdauer aktiviert bleibt.

2. Fernwirkanlage nach Anspruch 1, dadurch gekennzeichnet, daß der Empfänger (3) während der selbständigen Einschaltdauer des Senders (2) mindestens einmal seinen Einschaltzustand während einer vorbestimmten Zeitdauer aufrechterhält.

3. Fernwirkanlage nach Anspruch 1 oder 2, dadurch gekennzeichnet, daß das Taktverhältnis des Empfängers 1:4 beträgt.

4. Fernwirkanlage nach einem der Ansprüche 1 bis 3, dadurch gekennzeichnet, daß die vorbestimmte Einschaltzeitdauer des Senders (2) mindestens 5 Sekunden beträgt.

5. Fernwirkanlage nach einem der Ansprüche 2 bis 4, dadurch gekennzeichnet, daß sich die vorbestimmte Zeitdauer des Einschaltzustandes des Empfängers (39 auf etwa 1 Sekunde beläuft.

6. Fernwirkanlage nach einem der vorangehenden Ansprüche, dadurch gekennzeichnet, daß mittels der Fernwirkanlage (1) als Fahrzeugzusatzeinrichtung (6) ein Fahrzeugzusatzheizgerät betreibbar ist.

7. Fernwirkanlage nach einem der Ansprüche 1 bis 5, dadurch gekennzeichnet, daß eine Personenrufanlage betreibbar ist.

FIG. 1

FIG. 2

Sender (2)

EIN
AUS
ca. 5 Sek.

Empfänger (3)

EIN
AUS
1 Sek | ca. 4 Sek.
t

**Europäisches Patentamt**

**EUROPÄISCHER RECHERCHENBERICHT**

Nummer der Anmeldung

**EP 90 12 3709**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 857 917  (SATO)<br>* Figuren 1a-1c; Spalte 2, Zeilen 27-31 *<br>– – – | 1-7 | H 04 B 1/16 |
| X | GB-A-2 152 719  (NEC CORP.)<br>* Seite 2, Zeile 86 - Seite 3, Zeile 36 *<br>– – – – | 1 | |

**RECHERCHIERTE SACHGEBIETE (Int. Cl.5)**

H 04 B

Der vorliegende Recherchenbericht wurde für alle Patentansprüche erstellt

| Recherchenort | Abschlußdatum der Recherche | Prüfer |
|---|---|---|
| Den Haag | 28 August 91 | CRECHET P.G.M. |